# EUROPEAN PATENT SPECIFICATION

(11) **EP 3 904 145 B1**
(45) Date of publication and mention of the grant of the patent: **21.02.2024**
(21) Application number: 19905130.1
(22) Date of filing: 18.12.2019
(51) Int. Cl.: B60L 15/20

(54) **ELECTRIC VEHICLE DRIVE CONTROL METHOD AND SYSTEM**
VERFAHREN UND SYSTEM ZUR STEUERUNG EINES ELEKTROFAHRZEUGS
PROCÉDÉ ET SYSTÈME DE COMMANDE D'ENTRAÎNEMENT DE VÉHICULE ÉLECTRIQUE

(30) Priority: 29.12.2018 CN 201811642042
(43) Date of publication of application: 03.11.2021
(73) Proprietor: Great Wall Motor Company Limited, Baoding, Hebei 071000 (CN)
(72) Inventor: ZHANG, Shuai, Baoding, Hebei 071000 (CN); WENG, Haoyu, Baoding, Hebei 071000 (CN); LIU, Xiu, Baoding, Hebei 071000 (CN); LI, Yan, Baoding, Hebei 071000 (CN); WANG, Yinlei, Baoding, Hebei 071000 (CN)
(74) Representative: Klunker IP Patentanwälte PartG mbB
(86) International application number: PCT/CN2019/126269
(87) International publication number: WO 2020/135180

(56) References cited:
- EP-A1- 3 100 926
- CN-A- 106 347 138
- CN-A- 108 638 859
- CN-B- 104 827 931

## Description

### FIELD

The present application relates to the technical field of new energy vehicles, and in particular to a drive control method for electric vehicle and system.

### BACKGROUND

With a massive consumption of petroleum resources and an increasing pollution of the global atmospheric environment, governments and automobile companies generally recognize that energy conservation and emission reduction are development direction of future automobile technology, and electric vehicles have the advantages of high efficiency and energy saving, low emission or zero emission. The environmental protection characteristics are in line with the future development direction of energy saving and emission reduction in the automobile industry, so electric vehicles are widely valued by countries all over the world.

Different from traditional fuel vehicle, electric motor has a larger speed range and better torque characteristics, so that power demand of the vehicle may be reached without increasing gears in the gearbox. At present, electric vehicle is generally driven based on a throttle operating curve.

In a course of practicing the present application, applicant found that: on one hand, speed of an electric vehicle is very sensitive to changing load conditions of a throttle opening. In case that the vehicle is required to travel at a constant speed, a driver needs to operate an accelerator pedal frequently to maintain the constant speed, which increases operating burden and labor intensity of the driver; on the other hand, some users may expect to drive at different speeds under different application scenarios (e.g., vehicle following, vehicle driving on highway, etc.). It has also become one of the hot research directions in the industry.

CN 106 347 138 A describes an energy recovery control method and device for a electric vehicle. The method comprises the steps of determining whether the electric vehicle is in a sliding condition and, in case the electric vehicle is in the sliding condition, determining a running speed of the battery electric vehicle and a first opening of an accelerator pedal. A first speed range corresponding to the running speed and a first motor torque curve corresponding to the first speed range is determined according to a relation between a preset speed range and the motor torque curve. A torque value corresponding to the first opening is obtained from the first motor torque curve according to the first opening of the accelerator pedal and the motor output state of the electric vehicle is controlled according to the torque value to perform energy recovery.
CN 108 638 859 A describes an electric vehicle accelerator control method and device. An electric vehicle is provided with a motor and a vehicle controller, wherein the motor is driven by a driving circuit that is connected with a motor controller via a control circuit. The accelerator control device comprises an electronic accelerator pedal and the vehicle controller is connected with the electronic accelerator pedal and the motor controller via a signal circuit. The electric vehicle accelerator control structure and control method aims at increasing the response speed of the control process. Different control strategies are adopted dependent on different accelerator opening degrees. The electric vehicle is controlled according to the intention of the driver to improve the driving comfort.

### SUMMARY

An electric vehicle drive control method is provided according to the present invention, to at least solve a technical problem of operating burden and labor intensity caused by frequent operation of an accelerator pedal in the conventional technology, and a technical problem of the inability to provide multiple steady-speed control strategies suitable for multiple application scenarios for electric vehicles.

In order to achieve the above objective, technical solutions of the present application are achieved as follows.

An electric vehicle drive control method, including obtaining throttle opening information of an electric vehicle; determining, based on a pre-configured reference table of steady speeds and throttle powers, target motor drive power corresponding to the obtained throttle opening information, where the reference table of steady speeds and throttle powers stores a relationship between multiple sets of throttle opening information and corresponding motor drive power, and each of the motor drive powers corresponds to a different steady speed of the electric vehicle; and driving, based on the determined target motor drive power, a motor of the electric vehicle, where the electric vehicle is driven to travel at a target steady speed corresponding to the target motor drive power.

Further, a throttle opening of the electric vehicle includes a steady speed throttle opening range and an overspeed throttle opening range greater than the steady speed throttle opening range, where the determining, based on the pre-configured reference table of steady speeds and throttle powers, a target motor drive power corresponding to the obtained throttle opening information, includes determining whether the obtained throttle opening information falls within the steady speed throttle opening range; and determining, based on the pre-configured reference table of steady speeds and throttle powers, a target motor drive power corresponding to the obtained throttle opening information, in a case of positive determination.

Further, in case that the obtained throttle opening information is not within the steady speed throttle opening range, the method further includes determining whether the obtained throttle opening information falls within the overspeed throttle opening range; and determining, according to an electronic throttle characteristic curve, motor drive power corresponding to the throttle opening information, in case that the obtained throttle opening information falls within the overspeed throttle opening range, where the electronic throttle characteristic curve indicates a positive correlation between throttle opening information and motor drive power under normal operating conditions.

Further, the electric vehicle is configured to have multiple operating modes, and different operating modes of a same throttle opening information in the reference table of steady speeds and throttle powers correspond to different steady speeds and/or motor drive powers of the electric vehicle, where the determining, based on the pre-configured reference table of steady speeds and throttle powers, a target motor drive power corresponding to the obtained throttle opening information, includes obtaining a current operating mode of the electric vehicle; and inquiring, based on the current operating mode and the obtained throttle opening information, the reference table of steady speeds and throttle powers, to determine a corresponding target motor drive power.

Further, before determining, based on the pre-configured reference table of steady speeds and throttle powers, a target motor drive power corresponding to the obtained throttle opening information, the method further includes obtaining a vehicle coasting resistance of the electric vehicle at a calibrated traveling speed, where the calibrated traveling speed corresponds to a calibrated throttle opening information; determining a vehicle resistance power corresponding to the vehicle coasting resistance; determining, based on the vehicle resistance power and a pre-configured motor drive conversion efficiency, a calibrated motor drive power corresponding to the traveling speed; and establishing, based on the calibrated motor drive power and the calibrated traveling speed, the reference table of steady speeds and throttle powers. Compared with the conventional technology, the drive control method for the electric vehicle according to the present application has the following advantages.

In the drive control method for the electric vehicle of the present application, a pre-configured reference table of steady speeds and throttle powers of the vehicle is adopted, and the obtained throttle opening information is referenced for comparison and inquiring, so as to control the vehicle to travel at a steady speed, based on a motor power of the corresponding throttle; and, since different motor drive powers correspond to different steady speeds, and the reference table records a relationship between the motor drive power and the throttle opening information, so that users may realize traveling at different and steady speeds by operating under different throttle opening information, which satisfies personalized speed requirement of user to travel at constant speed under different application scenarios, and improves the user experience. Another object of the present application is to provide a drive control system for an electric vehicle, to at least solve a technical problem of operating burden and labor intensity caused by frequent operation of a accelerator pedal in the conventional technology, and a technical problem of the inability to provide multiple control strategies suitable for multiple application scenarios for electric vehicles.

In order to achieve the above objective, technical solutions of the present application are achieved as follows.

A drive control system for an electric vehicle, including a throttle opening information obtaining unit configured to obtain throttle opening information of the electric vehicle; a motor drive power determination unit configured to determine, based on the pre-configured reference table of steady speeds and throttle powers, target motor drive power corresponding to the obtained throttle opening information, where the reference table of steady speeds and throttle powers stores a relationship between multiple sets of throttle opening information and motor drive powers, and each of the motor drive powers corresponds to a different steady speed of the electric vehicle; and a motor drive unit configured to drive, based on the determined target motor drive power, a motor of the electric vehicle, where the electric vehicle travels at a target steady speed corresponding to the target motor drive power.

Further, a throttle opening of the electric vehicle includes a steady speed throttle opening range and an overspeed throttle opening range greater than the steady speed throttle opening range, where the motor drive power determination unit includes a steady speed determination module configured to determine whether the obtained throttle opening information falls within the steady speed throttle opening range; and a motor power determination module configured to determine, based on the pre-configured reference table of steady speeds and throttle powers, a target motor drive power corresponding to the obtained throttle opening information, in a case of positive determination.

Further, in case that the obtained throttle opening information is not within the steady speed throttle opening range, the drive control system of the electric vehicle further includes an overspeed power determination unit, including an overspeed determination module configured to determine whether the obtained throttle opening information falls within the overspeed throttle opening range; and a throttle drive module configured to determine, according to an electronic throttle characteristic curve, motor drive power corresponding to the throttle opening information, in case that the obtained throttle opening information is within the overspeed throttle opening range, where the electronic throttle characteristic curve indicates a positive correlation between throttle opening information and motor drive power under normal operating conditions.

Further, the electric vehicle is configured to have multiple operating modes, and different operating modes of a same throttle opening information in the reference table of steady speeds and throttle powers correspond to different steady speeds and/or motor drive powers of the electric vehicle, where the motor drive power determination unit includes a mode obtaining module configured to obtain a current operating mode of the electric vehicle; and a mode power determination module configured to inquire, based on the current operating mode and the obtained throttle opening information, the reference table of steady speeds and throttle powers, to determine a corresponding target motor drive power.

Further, the drive control system of the electric vehicle further includes a table calibration unit, including a vehicle resistance obtaining module configured to obtain a vehicle coasting resistance of the electric vehicle at a calibrated traveling speed, before determining, based on the pre-configured reference table of steady speeds and throttle powers, a target motor drive power corresponding to the obtained throttle opening information, where the calibrated traveling speed corresponds to a calibrated throttle opening information; a vehicle resistance power determination module configured to determine a vehicle resistance power corresponding to the vehicle coasting resistance; a calibrated power determination module configured to determine, based on the vehicle resistance power and a pre-configured motor drive conversion efficiency, a calibrated motor drive power corresponding to the traveling speed; and a reference table establishing module configured to establish, based on the calibrated motor drive power and the calibrated traveling speed, the reference table of steady speeds and throttle powers. The electric vehicle drive control system has the same advantages as the above electric vehicle drive control method over the conventional technology, which is not described here. Correspondingly, in a further aspect of the present invention, a machine-readable storage medium including a memory stored with instructions, wherein the instructions are used to enable a machine to execute the drive control method of an electric vehicle described above, is provided.

Other features and advantages of the present application will be described in detail in the following specific embodiments.

### BRIEF DESCRIPTION OF THE DRAWINGS

The drawings constituting a part of the present application are used for further understanding of the present application, and illustrative embodiments of the present application and the illustration thereof are used to explain the present application. In the drawings:
FIG. 1 is a flowchart of a drive control method for an electric vehicle provided according to an embodiment of the present application;
FIG. 2 is a flowchart for establishing a reference table of steady speeds and throttle powers in the drive control method for an electric vehicle provided according to an embodiment of the present application;
FIG. 3 is a flowchart for determining a driving intention of a driver based on throttle opening information in the drive control method for an electric vehicle provided according to an embodiment of the present application; and
FIG. 4 is a structural block diagram of a drive control system for electric vehicle provided according to an embodiment of the present application.

Reference numerals in the drawings:
401: throttle opening information obtaining unit;
402: motor drive power determination unit;
40: electric vehicle drive control system;
403: motor drive unit
404: overspeed power determination unit;
405: table calibration unit

### DETAILED DESCRIPTION OF THE EMBODIMENTS

It should be noted that embodiments of the present application and features in the embodiments may be combined with each other as long as there is no conflict.

The present application will be illustrated in detail hereinafter in conjunction with the drawings and the embodiments.

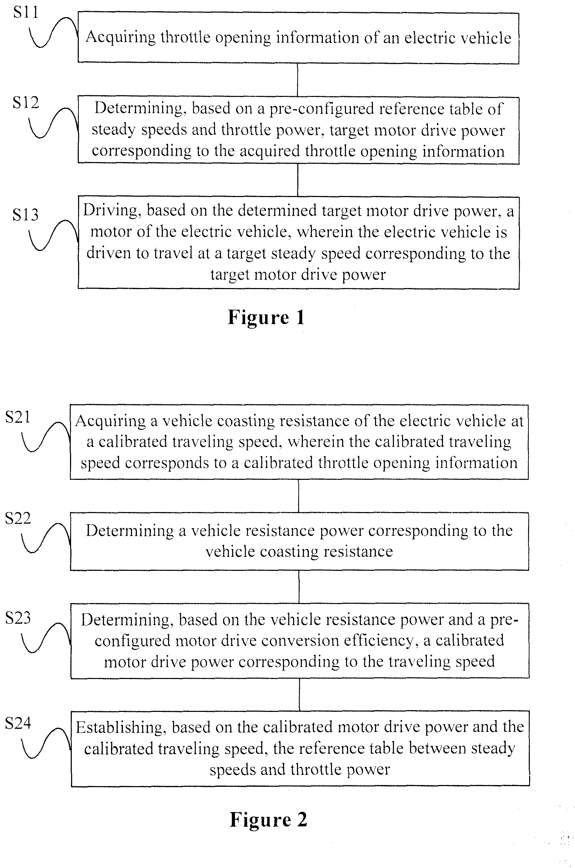

As shown in FIG. 1, the electric vehicle drive control method provided according to an embodiment of the present application includes:
S11, obtaining throttle opening information of an electric vehicle.

Regarding an execution subject of the method of the embodiment of the present application, it may be implemented by a processor or a control unit set by the vehicle itself, such as a vehicle control unit (VCU) or an electronic control unit (ECU), etc. In addition, it may further be executed by a new processor or control unit additionally attached to the vehicle.

It is understandable that the electric vehicles in the embodiments of the present application may include various types of electric vehicles, such as pure electric vehicles or hybrid electric vehicles, and implementing the drive control method of these vehicles in an electric drive mode. Regarding the method of obtaining the throttle opening information, it may be obtained by a throttle opening sensor, and then the collected network opening information is transmitted to a processor or a control unit through the vehicle CAN network. As an alternative or an additional embodiment, the processor or the control unit may also obtain the throttle opening information through other methods (e.g., wireless communication).

S12, determining, based on the pre-configured reference table of steady speeds and throttle powers, target motor drive power corresponding to the obtained throttle opening information. Where the reference table of steady speeds and throttle powers stores a relationship between multiple sets of throttle opening information and motor drive powers, and each of the motor drive powers corresponds to different steady speeds of the electric vehicle.

It should be noted that a relationship form in the reference table of steady speeds and throttle powers should not be limited here. For example, the relationship may be a straight line or a curve relationship, or the relationship may also be a mapping relationship (e.g., throttle opening information-motor drive power) . Further, when the motor is driven by each motor drive power in the reference table, a drive force of the electric vehicle matches a resistance of the whole vehicle, and the electric vehicle may travel at steady speeds or constant speeds corresponding to the motor drive power in the reference table.

Regarding the determination of the pre-configured reference table of steady speeds and throttle powers, it may be implemented in various ways, for example, it may be obtained through multiple preliminary tests, or implemented through a calibration test, and so on. As an example, the reference table of steady speeds and throttle powers may be established through a process shown in FIG. 2: S21, obtaining a vehicle coasting resistance of the electric vehicle at a calibrated traveling speed, where the calibrated traveling speed corresponds to a calibrated throttle opening information; exemplarily, a relationship between the throttle opening information and the calibrated traveling speed may be determined in advance, and then the vehicle is subjected to a preliminary simulation test and a coasting test verification to obtain a rolling resistance and air resistance of the vehicle, to further obtain a vehicle coasting resistance. S22, determining a vehicle resistance power corresponding to the vehicle coasting resistance; exemplarily, a corresponding vehicle resistance power may be determined according to the power calculation formula P=F×v. S23, determining, based on the vehicle resistance power and the pre-configured motor drive conversion efficiency, a calibrated motor drive power corresponding to the traveling speed; it should be noted that during the operation of an electric vehicle driven by a motor, not all motor drive power is converted to vehicle drive power. That is, there may be the above motor drive conversion efficiency between the motor drive power and the vehicle drive power, which may be any suitable value pre-configured by the user or the vehicle manufacturer according to circumstances. S24, establishing, based on the calibrated motor drive power and the calibrated traveling speed, the reference table of steady speeds and throttle powers; exemplarily, by selecting multiple different calibrated traveling speeds, and correspondingly determining multiple corresponding calibrated drive power, a reference table of a mapping relational expression or a curve relational expression is established based on the multiple calibrated drive power.

S 13, driving, based on the determined target motor drive power, a motor of the electric vehicle, where the electric vehicle is driven to travel at a target steady speed corresponding to the target motor drive power.

In the embodiment of the present application, a pre-calibrated reference table of steady speeds and throttle powers corresponding to different steady speeds of the vehicle is adopted to compare with the obtained throttle opening information, so as to achieve vehicle traveling at steady speeds based on the motor power control of the corresponding throttle. Further, since different motor drive power correspond to different steady speeds, and the reference table records a relationship between the motor drive power and the throttle opening information, so that users may realize traveling at different and steady speeds by operating under different throttle opening information, which satisfies personalized speed requirement of user to travel at constant speed under different application scenarios, and improves the user experience.

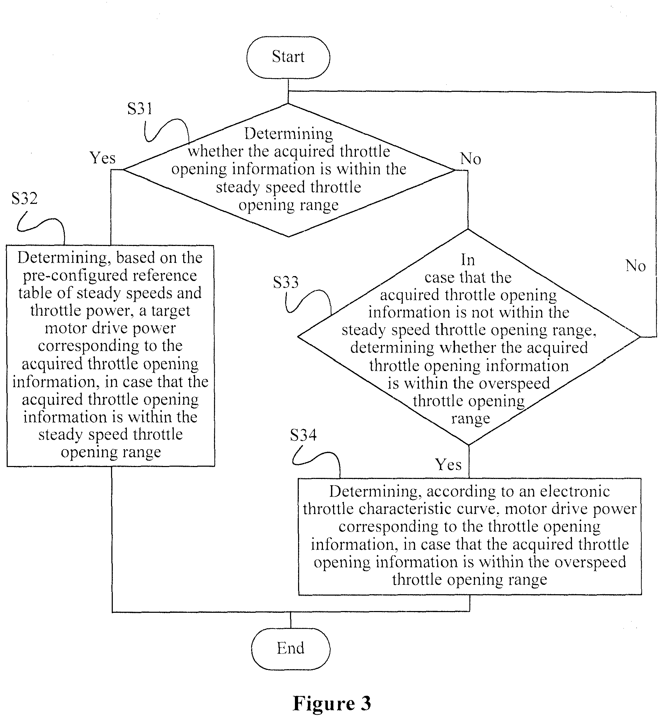

In some preferred embodiments according to the invention, a throttle opening of an electric vehicle includes a steady speed throttle opening range and an overspeed throttle opening range greater than the steady speed throttle opening range. Therefore, when determining the target motor drive power in S12, it needs to determine the range to which the throttle information belongs, to determine whether the user has the intention of driving at a steady speed. It should be noted that entire opening of the throttle may be directly composed of a deep accelerator range and a shallow accelerator pedal range, or it may further include other additional throttle ranges. In addition, the shallow accelerator range may be continuous with or separated with the deep accelerator range. As shown in FIG. 3, a process of determining a driving intention of a driver based on the throttle opening information includes:
S31, determining whether the obtained throttle opening information is within the steady speed throttle opening range;
S32, determining, based on the pre-configured reference table of steady speeds and throttle powers, a target motor drive power corresponding to the obtained throttle opening information, in case of a positive determination;
S33, in case that the obtained throttle opening information is not within the steady speed throttle opening range, determining whether the obtained throttle opening information falls within the overspeed throttle opening range;
S34, determining, according to an electronic throttle characteristic curve, motor drive power corresponding to the throttle opening information, in case of a positive determination.

Where the electronic throttle characteristic curve indicates a positive correlation between throttle opening information and motor drive power under normal operating conditions. For example, depth information of an electronic accelerator pedal under normal operating conditions is proportional to a motor drive speed. That is, the deeper the accelerator pedal, the greater the corresponding motor drive speed and vehicle acceleration, to achieve acceleration or overtaking.

A shallow accelerator range from 0% to 40% and a deep accelerator range from 40% to 100% are taken as an example. In case that the collected throttle opening information is 20%, it falls into the shallow accelerator range, which proves that the driver has an intention of driving at a steady speed, and S32 is performed to determine the target motor drive power corresponding to the steady speed by looking up a curve relationship in the table. In case that the collected throttle opening information is 60%, it falls into the deep accelerator range, which proves that the driver does not have the intention of driving at a steady speed, the corresponding target motor drive power is determined normally corresponding to the throttle opening information. For example, the deeper the accelerator pedal, the faster the acceleration to achieve the effect of overspeed. In the embodiment of the present invention, multiple ranges are assigned to one throttle, and different motor drive strategies are applied to different ranges to realize a steady-speed drive control in the shallow accelerator range and an overspeed drive control in the deep accelerator range, which greatly satisfies the personalized user driving needs.

In some preferred embodiments, the electric vehicle is configured to have multiple operating modes (such as ECO (energy-saving mode), Normal (normal mode), and Sport (sports mode) as shown in Table 1), and different operating modes of a same throttle opening information in the reference table of steady speeds and throttle powers correspond to different steady speeds and/or motor drive powers of the electric vehicle.

**Table 1 Examples of steady vehicle speeds in different modes and different accelerator pedal depths**

| accelerator pedal depths | 10% | 20% | 30% | 40% | 50% |
|---|---|---|---|---|---|
| ECO | 20 | 45 | 70 | 100 | 120 |
| Normal | 30 | 60 | 90 | 120 | N/A |
| Sport | 40 | 80 | 120 | N/A | |

Normally, a common throttle range of ordinary vehicles is 5%-40%, and a common speed is lower than 120km/h (the maximum speed allowed on Chinese expressways), which is taken as an example. When designing a vehicle steady speed throttle range, as shown in Table 1, values within 40% may be selected. For example, for EVs with a maximum speed greater than 120km/h, accelerator pedal depth for a vehicle speed of 120km/h is designed according to product positioning and accelerator pedal comfort level. In Normal mode, the pedal comfort level of expressway driving may be considered. In ECO mode, requirements of most of the speed except for expressway (highway) driving may be satisfied. A larger steady speed range may be selected, and the vehicle may travel at constant speeds, so as to achieve economic goals. In Sport mode, a smaller steady speed range may be selected, so that the vehicle travels at higher speeds, and the accelerator pedal response is more aggressive.

Correspondingly, when determining the target motor drive power of the corresponding electric vehicle, it may further be achieved by combining the current operating mode. As an example, it may be performed by, firstly obtaining a current operating mode of the electric vehicle, for example, obtaining the current operating mode selected by user operation. After that, inquiring, based on the current operating mode and the obtained throttle opening information, the reference table of steady speeds and throttle powers, to determine a corresponding target motor drive power. For example, a speed corresponding to a 20% accelerator pedal depth in the ECO mode is 45 km /h, and the 20% accelerator pedal depth in the Sport mode corresponds to a speed of 80 km/h, and corresponding vehicle resistances are different, which also makes the motor drive power for realizing the uniform speed traveling is different (as shown in Table 2).

**Table 2 Maximum power demand at different accelerator pedal depths**

| accelerat or pedal depths | 10% | 20% | 30% | 40% | 50% | 60%-100 % |
|---|---|---|---|---|---|---|
| ECO | Vehicle resistance power at 20km/h | Vehicle resistance power at 45 km/h | Vehicle resistance power at 70 km/h | Vehicle resistance power at 100 km/h | Vehicle resistance power at 120 km/h | Gradually release power |
| Normal | Vehicle resistance power at 30 km/h | Vehicle resistance power at 60 km/h | Vehicle resistance power at 90 km/h | Vehicle resistance power at 120 km/h | Gradually release power | |
| Sport | Vehicle resistance power at 40 km/h | Vehicle resistance power at 80 km/h | Vehicle resistance power at 120 km/h | Gradually release power | | |

As shown in Table 2, shallow accelerator ranges corresponding to steady speeds in ECO mode, Normal mode and Sport mode are 10%-50%, 10%-40%, and 10%-30% respectively. In the subsequent overspeed throttle ranges greater than these shallow accelerator ranges, power is gradually released to accelerate in response to the throttle opening.

A design process of the overspeed range mainly involves design of the following parameters: maximum torque design-calculating from requirements of the maximum grade ability of the vehicle in each mode, combined with vehicle comfort level and fine-tuned with torque loading rate (torque loading rate: torque variation per unit time);
maximum power design-taking the maximum values of the following parameters of the vehicle in each mode:
1) acceleration time from 0-50 and 0-100 - maximum power;
2) 4%, 8%, 12% of the maximum vehicle climbing speed - maximum power;

The maximum torque and maximum power of the vehicle in each mode are determined as above, which are gradually released as the accelerator pedal depth increases. The Sport mode may reach the maximum characteristics in advance (e.g., 80% of the accelerator pedal depth full power) according to the situation. The specific accelerator curve needs to be calibrated and corrected in practice.

It is understandable that the arrangement of the accelerator pedal may be diversified. For example, arrangement of the accelerator pedal, the stroke, and the pedal force are comprehensively considered. For example, sport vehicles usually use floor-type accelerator pedals, which have short pedal stroke and larger pedal force. The accelerator design of this type of vehicle is usually aggressive, so that the required power effect may be obtained without stepping too deeply and without too much force. Combined with larger pedal force, the accelerator pedal is easier to control, and the pedal feel is desirable. Ordinary family vehicles usually adopt suspended accelerator pedals, which have long accelerator stroke and smaller pedal force. However, for this type of pedal, force may only be exerted by the forefoot, and the heel is stepped on the floor, which is easier to cause fatigue problems of legs and feet. Therefore, a steady speed throttle range should be selected to fall within the scope that is not easy to cause fatigue feelings.

Therefore, in the embodiment of the present application, a requirement of steady vehicle speed should be taken into account in designing the shallow accelerator range. That is, feet labor intensity of the driver is lightened when driving at a constant speed for a long time. That is, there is no need to frequently adjust the throttle to stabilize the vehicle speed, and no need to step the accelerator pedal too deeply, etc. The accelerator pedal is stepped deeply to mainly release the power of the entire vehicle to achieve overtaking acceleration.

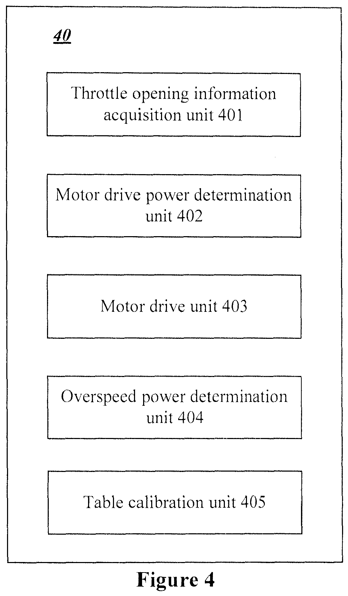

As shown in FIG. 4, an electric vehicle drive control system 40 provided according to an embodiment of the present application includes a throttle opening information obtaining unit 401 configured to obtain throttle opening information of the electric vehicle; a motor drive power determination unit 402 configured to determine, based on a pre-configured reference table of steady speeds and throttle powers, target motor drive power corresponding to the obtained throttle opening information, where the reference table of steady speeds and throttle powers stores a relationship between multiple sets of throttle opening information and corresponding motor drive power, and each motor drive power corresponds to different steady speeds of the electric vehicle; and a motor drive unit 403 configured to drive, based on the determined target motor drive power, a motor of the electric vehicle, where the electric vehicle travels at a target steady speed corresponding to the target motor drive power.

In some embodiments, a throttle opening of the electric vehicle includes a steady speed throttle opening range and an overspeed throttle opening range greater than the steady speed throttle opening range. The motor drive power determination unit 402 includes a steady speed determination module configured to determine whether the obtained throttle opening information falls within the steady speed throttle opening range; and a motor power determination module configured to determine, based on the pre-configured reference table of steady speeds and throttle powers, a target motor drive power corresponding to the obtained throttle opening information, in case of a positive determination.

In some embodiments, in case that the obtained throttle opening information is not within the steady speed throttle opening range, the electric vehicle drive control system further includes an overspeed power determination unit 404, which includes an overspeed determination module configured to determine whether the obtained throttle opening information is within the overspeed throttle opening range; and a throttle drive module configured to determine, according to an electronic throttle characteristic curve, motor drive power corresponding to the throttle opening information, in case that the obtained throttle opening information falls within the overspeed throttle opening range, where the electronic throttle characteristic curve indicates a positive correlation between throttle opening information and motor drive power under normal operating conditions.

In some embodiments, the electric vehicle is configured to have multiple operating modes, and different operating modes of a same throttle opening information in the reference table of steady speeds and throttle powers correspond to different steady speeds and/or motor drive powers of the electric vehicle, where the motor drive power determination unit 402 includes a mode obtaining module configured to obtain a current operating mode of the electric vehicle; and a mode power determination module configured to inquire, based on the current operating mode and the obtained throttle opening information, the reference table of steady speeds and throttle powers, to determine a corresponding target motor drive power.

In some embodiments, the electric vehicle drive control system 40 further includes a table calibration unit 405, including a vehicle resistance obtaining module configured to obtain a vehicle coasting resistance of the electric vehicle at a calibrated traveling speed, where the calibrated traveling speed corresponds to a calibrated throttle opening information; a vehicle resistance power determination module configured to determine a vehicle resistance power corresponding to the vehicle coasting resistance, before determining, based on a pre-configured reference table of steady speeds and throttle powers, a target motor drive power corresponding to the obtained throttle opening information; a calibrated power determination module configured to determine, based on the vehicle resistance power and a pre-configured motor drive conversion efficiency, a calibrated motor drive power corresponding to the traveling speed; and a reference table establishing module configured to establish, based on the calibrated motor drive power and the calibrated traveling speed, the reference table of steady speeds and throttle powers.

For more details about the electric vehicle drive control system of the embodiment of the present application, reference is made to the relevant description of the electric vehicle drive control method embodiment above, and may obtain the same as or corresponding technical effects to the electric vehicle drive control method described above, which is not described here.

Correspondingly, a machine-readable storage medium is further provided according to the present invention, the machine-readable storage medium includes a memory stored with instructions, which are used to enable a machine to execute the electric vehicle drive control method of any embodiment described herein. The machine-readable storage medium includes, but is not limited to, phase change memory (PRAM), static random access memory (SRAM), dynamic random access memory (DRAM), other types of random access memories (RAM), read only memory (ROM), electrically erasable programmable read-only memory (EEPROM), flash memory (Flash Memory) or other memory technologies, compact disk read-only memory (CD-ROM), digital versatile disc (DVD) or other optical storage, magnetic cassette tape, magnetic tape disk storage or other magnetic storage devices and other media that can store program codes. Where, the machine may be, for example, a control unit of a monocular camera.

## Claims

1. A drive control method for an electric vehicle, comprising the steps of
obtaining throttle opening information of an electric vehicle, the throttle opening information of the electric vehicle comprising a steady speed throttle opening range and an overspeed throttle opening range greater than the steady speed throttle opening range;
determining whether the obtained throttle opening information falls within the steady speed throttle opening range;
determining, in case that the obtained throttle opening information falls within the steady speed throttle opening range, a target motor drive power corresponding to the obtained throttle opening information based on a pre-configured reference table of steady speeds and throttle powers, wherein the reference table of steady speeds and throttle powers stores a relationship between a plurality of sets of throttle opening information and motor drive powers, and each of the motor drive powers corresponds to a different steady speed of the electric vehicle; and
driving, in case that the obtained throttle opening information falls within the steady speed throttle opening range, a motor of the electric vehicle based on the determined target motor drive power, so that the electric vehicle is driven to travel at a target steady speed corresponding to the target motor drive power
determining, in case that the obtained throttle opening information is not within the steady speed throttle opening range, whether the obtained throttle opening information falls within the overspeed throttle opening range
determining, according to an electronic throttle characteristic curve, a motor drive power corresponding to the throttle opening information, in case that the obtained throttle opening information falls within the overspeed throttle opening range, wherein the electronic throttle characteristic curve indicates a positive correlation between throttle opening information and motor drive power under normal operating conditions.

2. The drive control method for the electric vehicle according to claim 1, wherein the electric vehicle is configured to have a plurality of operating modes, and different operating modes of a same throttle opening information in the reference table of steady speeds and throttle powers correspond to different steady speeds and/or motor drive powers of the electric vehicle, wherein the determining, based on the pre-configured reference table of steady speeds and throttle powers, a target motor drive power corresponding to the obtained throttle opening information, comprises:
obtaining a current operating mode of the electric vehicle; and
determining a corresponding target motor drive power by inquiring, based on the current operating mode and the obtained throttle opening information, the reference table of steady speeds and throttle powers.

3. The drive control method for the electric vehicle according to claim 1, wherein before determining, based on a pre-configured reference table of steady speeds and throttle powers, a target motor drive power corresponding to the obtained throttle opening information, the method further comprises:
obtaining a vehicle coasting resistance of the electric vehicle at a calibrated traveling speed, wherein the calibrated traveling speed corresponds to a calibrated throttle opening information;
determining a vehicle resistance power corresponding to the vehicle coasting resistance;
determining, based on the vehicle resistance power and a pre-configured motor drive conversion efficiency, a calibrated motor drive power corresponding to the traveling speed; and
establishing, based on the calibrated motor drive power and the calibrated traveling speed, the reference table of steady speeds and throttle powers.

4. A drive control system (40) for an electric vehicle, comprising:
a throttle opening information obtaining unit (401) configured to obtain throttle opening information of the electric vehicle, wherein the throttle opening information of the electric vehicle comprises a steady speed throttle opening range and an overspeed throttle opening range greater than the steady speed throttle opening range;
a motor drive power determination unit (402) configured to determine, based on the pre-configured reference table of steady speeds and throttle powers, target motor drive power corresponding to the obtained throttle opening information, wherein the reference table of steady speeds and throttle powers stores a relationship between a plurality of sets of throttle opening information and motor drive powers, and each of the motor drive powers corresponds to a different steady speed of the electric vehicle, wherein the motor drive power determination unit (402) comprises a steady speed determination module configured to determine whether the obtained throttle opening information falls within the steady speed throttle opening range; and a motor power determination module configured to determine, based on the pre-configured reference table of steady speeds and throttle powers, a target motor drive power corresponding to the obtained throttle opening information, in case that the obtained throttle opening information falls within the steady speed throttle opening range;
a motor drive unit (403) configured to drive, based on the determined target motor drive power, a motor of the electric vehicle, wherein the electric vehicle travels at a target steady speed corresponding to the target motor drive power;
an overspeed determination module configured to determine whether the obtained throttle opening information falls within the overspeed throttle opening range; and
a throttle drive module configured to determine, according to an electronic throttle characteristic curve, motor drive power corresponding to the throttle opening information, in case that the obtained throttle opening information falls within the overspeed throttle opening range, wherein the electronic throttle characteristic curve indicates a positive correlation between throttle opening information and motor drive power under normal operating conditions.

5. The drive control system (40) for the electric vehicle according to claim 4, wherein the electric vehicle is configured to have a plurality of operating modes, and different operating modes of a same throttle opening information in the reference table of steady speeds and throttle powers correspond to a different steady speed and/or a motor drive power of the electric vehicle, wherein the motor drive power determination unit comprises:
a mode obtaining module configured to obtain a current operating mode of the electric vehicle; and
a mode power determination module configured to determine a corresponding target motor drive power by inquiring, based on the current operating mode and the obtained throttle opening information, the reference table of steady speeds and throttle powers.

6. The drive control system (40) for the electric vehicle according to claim 4, wherein the drive control system of the electric vehicle further comprises a table calibration unit, comprising:
a vehicle resistance obtaining module configured to obtain a vehicle coasting resistance of the electric vehicle at a calibrated traveling speed, before determining, based on the pre-configured reference table of steady speeds and throttle powers, a target motor drive power corresponding to the obtained throttle opening information; wherein the calibrated traveling speed corresponds to a calibrated throttle opening information;
a vehicle resistance power determination module configured to determine a vehicle resistance power corresponding to the vehicle coasting resistance;
a calibrated power determination module configured to determine, based on the vehicle resistance power and a pre-configured motor drive conversion efficiency, a calibrated motor drive power corresponding to the traveling speed; and
a reference table establishing module configured to establish, based on the calibrated motor drive power and the calibrated traveling speed, the reference table of steady speeds and throttle powers.

7. A machine-readable storage medium, comprising a memory stored with instructions, which are used to enable a machine to execute the drive control method for the electric vehicle according to any one of the claims 1 to 3.

## Patentansprüche

1. Antriebssteuerungsverfahren für ein Elektrofahrzeug, das die Schritte umfasst:
Erhalten von Drosselklappenöffnungsinformationen eines Elektrofahrzeugs, wobei die Drosselklappenöffnungsinformationen des Elektrofahrzeugs einen Drosselklappenöffnungsbereich bei konstanter Geschwindigkeit und einen Drosselklappenöffnungsbereich bei Übergeschwindigkeit umfassen, der größer ist als der Drosselklappenöffnungsbereich bei konstanter Geschwindigkeit;
Bestimmen, ob die erhaltenen Drosselklappenöffnungsinformationen in den Drosselklappenöffnungsbereich für konstante Geschwindigkeit fallen;
Bestimmen, falls die erhaltenen Drosselöffnungsinformationen in den Drosselöffnungsbereich mit konstanter Geschwindigkeit fallen, einer Zielmotorantriebsleistung, die den erhaltenen Drosselöffnungsinformationen entspricht, basierend auf einer vorkonfigurierten Referenztabelle von konstanten Geschwindigkeiten und Drosselleistungen, wobei die Referenztabelle von konstanten Geschwindigkeiten und Drosselleistungen eine Beziehung zwischen einer Vielzahl von Sätzen von Drosselöffnungsinformationen und Motorantriebsleistungen speichert, und jede der Motorantriebsleistungen einer unterschiedlichen konstanten Geschwindigkeit des Elektrofahrzeugs entspricht; und
Ansteuern eines Motors des Elektrofahrzeugs auf der Grundlage der bestimmten Zielmotorantriebsleistung, falls die erhaltenen Drosselöffnungsinformationen in den Drosselöffnungsbereich der konstanten Geschwindigkeit fallen, so dass das Elektrofahrzeug angetrieben wird, um mit einer konstanten Zielgeschwindigkeit zu fahren, die der Zielmotorantriebsleistung entspricht;
Bestimmen, für den Fall, dass die erhaltenen Drosselöffnungsinformationen nicht innerhalb des Drosselöffnungsbereichs für konstante Geschwindigkeit liegen, ob die erhaltenen Drosselöffnungsinformationen in den Drosselöffnungsbereich für Überdrehzahl fallen;
Bestimmen, gemäß einer elektronischen Drosselkennlinie, einer Motorantriebsleistung, die den Drosselöffnungsinformationen entspricht, für den Fall, dass die erhaltenen Drosselöffnungsinformationen in den Drosselklappenöffnungsbereich bei Übergeschwindigkeit fallen, wobei die elektronische Drosselkennlinie eine positive Korrelation zwischen Drosselöffnungsinformationen und Motorantriebsleistung unter normalen Betriebsbedingungen anzeigt.

2. Antriebssteuerungsverfahren für das Elektrofahrzeug nach Anspruch 1, wobei das Elektrofahrzeug so konfiguriert ist, dass es eine Vielzahl von Betriebsmodi aufweist, und verschiedene Betriebsmodi gleicher Drosselöffnungsinformationen in der Referenztabelle der konstanten Geschwindigkeiten und Drosselkräfte verschiedenen konstanten Geschwindigkeiten und/oder Motorantriebsleistungen des Elektrofahrzeugs entsprechen, wobei das Bestimmen, basierend auf der vorkonfigurierten Referenztabelle der konstanten Geschwindigkeiten und Drosselkräfte, einer Zielmotorantriebsleistung, die den erhaltenen Drosselöffnungsinformationen entspricht, umfasst
Ermitteln eines aktuellen Betriebsmodus des Elektrofahrzeugs; und
Bestimmen einer entsprechenden Soll-Motorantriebsleistung durch Abfragen der Referenztabelle der konstanten Drehzahlen und Drosselklappenleistungen auf der Grundlage des aktuellen Betriebsmodus und der erhaltenen Drosselklappenöffnungsinformationen.

3. Antriebssteuerungsverfahren für das Elektrofahrzeug nach Anspruch 1, wobei das Verfahren vor dem Bestimmen einer Soll-Motorantriebsleistung, die den erhaltenen Drosselklappenöffnungsinformationen entspricht, auf der Grundlage einer vorkonfigurierten Referenztabelle von konstanten Geschwindigkeiten und Drosselklappenleistungen, ferner umfasst:
Ermitteln eines Fahrzeugauslaufwiderstands des Elektrofahrzeugs bei einer kalibrierten Fahrgeschwindigkeit, wobei die kalibrierte Fahrgeschwindigkeit kalibrierten Drosselklappenöffnungsinformationen entspricht;
Bestimmen einer Fahrzeugwiderstandsleistung, die dem Fahrzeugauslaufwiderstand entspricht;
Bestimmen einer kalibrierten Motorantriebsleistung, die der Fahrgeschwindigkeit entspricht, basierend auf der Fahrzeugwiderstandsleistung und einer vorkonfigurierten Motorantriebsumwandlungseffizienz; und
Erstellen, basierend auf der kalibrierten Motorantriebsleistung und der kalibrierten Fahrgeschwindigkeit, der Referenztabelle der konstanten Geschwindigkeiten und Drosselkräfte.

4. Antriebssteuersystem (40) für ein elektrisches Fahrzeug, umfassend:
eine Drosselöffnungsinformationsbeschaffungseinheit (401), die konfiguriert ist, um Drosselöffnungsinformationen des Elektrofahrzeugs zu erhalten, wobei die Drosselöffnungsinformationen des Elektrofahrzeugs einen Drosselöffnungsbereich bei konstanter Geschwindigkeit und einen Drosselöffnungsbereich bei Überdrehzahl, der größer als der Drosselöffnungsbereich bei konstanter Geschwindigkeit ist, umfassen
eine Motorantriebsleistungs-Bestimmungseinheit (402), die so konfiguriert ist, dass sie auf der Grundlage der vorkonfigurierten Referenztabelle von konstanten Drehzahlen und Drosselklappenleistungen eine Zielmotorantriebsleistung bestimmt, die den erhaltenen Drosselklappenöffnungsinformationen entspricht, wobei die Referenztabelle von konstanten Drehzahlen und Drosselklappenleistungen eine Beziehung zwischen einer Vielzahl von Sätzen von Drosselklappenöffnungsinformationen und Motorantriebsleistungen speichert, und jede der Motorantriebsleistungen einer anderen konstanten Geschwindigkeit des Elektrofahrzeugs entspricht, wobei die Motorantriebsleistungs-Bestimmungseinheit (402) ein Modul zur Bestimmung der konstanten Geschwindigkeit umfasst, das konfiguriert ist, um zu bestimmen, ob die erhaltenen Drosselöffnungsinformationen in den Drosselöffnungsbereich der konstanten Geschwindigkeit fallen; und
ein Motorleistungsbestimmungsmodul, das so konfiguriert ist, dass es auf der Grundlage der vorkonfigurierten Referenztabelle mit konstanten Geschwindigkeiten und Drosselklappenleistungen eine Zielmotorantriebsleistung bestimmt, die den erhaltenen Drosselklappenöffnungsinformationen entspricht, falls die erhaltenen Drosselklappenöffnungsinformationen in den Drosselklappenöffnungsbereich mit konstanter Geschwindigkeit fallen;
eine Motorantriebseinheit (403), die so konfiguriert ist, dass sie auf der Grundlage der ermittelten Zielmotorantriebsleistung einen Motor des Elektrofahrzeugs antreibt, wobei das Elektrofahrzeug mit einer gleichmäßigen Zielgeschwindigkeit fährt, die der Zielmotorantriebsleistung entspricht;
ein Überdrehzahlbestimmungsmodul, das konfiguriert ist, um zu bestimmen, ob die erhaltenen Drosselöffnungsinformationen in den Überdrehzahl-Drosselöffnungsbereich fallen; und
ein Drosselklappen-Antriebsmodul, das so konfiguriert ist, dass es gemäß einer elektronischen Drosselklappen-Kennlinie die Motorantriebsleistung entsprechend den Drosselklappen-Öffnungsinformationen bestimmt, falls die erhaltenen Drosselklappen-Öffnungsinformationen in den Überdrehzahl-Drosselklappen-Öffnungsbereich fallen, wobei die elektronische Drosselklappen-Kennlinie eine positive Korrelation zwischen den Drosselklappen-Öffnungsinformationen und der Motorantriebsleistung unter normalen Betriebsbedingungen anzeigt.

5. Antriebssteuersystem (40) für das Elektrofahrzeug nach Anspruch 4, wobei das Elektrofahrzeug so konfiguriert ist, dass es eine Vielzahl von Betriebsmodi aufweist, und verschiedene Betriebsmodi gleicher Drosselklappenöffnungsinformation in der Referenztabelle der konstanten Geschwindigkeiten und Drosselklappenleistungen einer unterschiedlichen konstanten Geschwindigkeit und/oder einer Motorantriebsleistung des Elektrofahrzeugs entsprechen, wobei die Motorantriebsleistungs-Bestimmungseinheit umfasst:
ein Modul zum Erhalten eines Modus, das konfiguriert ist, um einen aktuellen Betriebsmodus des Elektrofahrzeugs zu erhalten; und
ein Modul zur Bestimmung der Betriebsart, das so konfiguriert ist, dass es eine entsprechende Soll-Motorantriebsleistung bestimmt, indem es auf der Grundlage der aktuellen Betriebsart und den erhaltenen Drosselklappenöffnungsinformationen die Referenztabelle der konstanten Geschwindigkeiten und Drosselklappenleistungen abfragt.

6. Das Antriebssteuersystem (40) für das Elektrofahrzeug nach Anspruch 4, wobei das Antriebssteuersystem des Elektrofahrzeugs ferner eine Tabellenkalibrierungseinheit umfasst, die Folgendes umfasst:
ein Modul zur Ermittlung des Fahrzeugwiderstands, das so konfiguriert ist, dass es einen Fahrzeugausrollwiderstand des Elektrofahrzeugs bei einer kalibrierten Fahrgeschwindigkeit ermittelt, bevor es auf der Grundlage der vorkonfigurierten Referenztabelle mit konstanten Geschwindigkeiten und Drosselklappenleistungen eine Zielmotorantriebsleistung bestimmt, die den ermittelten Drosselklappenöffnungsinformationen entspricht; wobei die kalibrierte Fahrgeschwindigkeit kalibrierten Drosselklappenöffnungsinformationen entspricht;
ein Fahrzeugwiderstandsleistungsbestimmungsmodul, das so konfiguriert ist, dass es eine Fahrzeugwiderstandsleistung bestimmt, die dem Fahrzeugausrollwiderstand entspricht;
ein Modul zur Bestimmung der kalibrierten Leistung, das so konfiguriert ist, dass es auf der Grundlage der Fahrzeugwiderstandsleistung und einer vorkonfigurierten Motorantriebsumwandlungseffizienz eine kalibrierte Motorantriebsleistung bestimmt, die der Fahrgeschwindigkeit entspricht; und
ein Referenztabellen-Erstellungsmodul, das so konfiguriert ist, dass es auf der Grundlage der kalibrierten Motorantriebsleistung und der kalibrierten Fahrgeschwindigkeit die Referenztabelle der konstanten Geschwindigkeiten und Drosselkräfte erstellt.

7. Maschinenlesbares Speichermedium mit einem Speicher, in dem Befehle gespeichert sind, die verwendet werden, um eine Maschine in die Lage zu versetzen, das Antriebssteuerungsverfahren für das Elektrofahrzeug nach einem der Ansprüche 1 bis 3 auszuführen.

## Revendications

1. Procédé de commande d'entraînement pour un véhicule électrique, comprenant les étapes incluant :
l'obtention d'une information d'ouverture d'étrangleur d'un véhicule électrique, l'information d'ouverture d'étrangleur du véhicule électrique comprenant une plage d'ouverture d'étrangleur à vitesse régulière stabilisée et une plage d'ouverture d'étrangleur en survitesse plus grande que la plage d'ouverture d'étrangleur à vitesse régulière stabilisée ;
la détermination de si l'information d'ouverture d'étrangleur obtenue tombe à l'intérieur de la plage d'ouverture d'étrangleur à vitesse régulière stabilisée ;
la détermination, dans le cas où l'information d'ouverture d'étrangleur obtenue tombe à l'intérieur de la plage d'ouverture d'étrangleur à vitesse régulière stabilisée, d'une puissance d'entraînement de moteur cible qui correspond à l'information d'ouverture d'étrangleur obtenue sur la base d'une table de référence préconfigurée de vitesses régulières stabilisées et de puissances d'étrangleur, dans lequel la table de référence de vitesses régulières stabilisées et de puissances d'étrangleur stocke une relation entre une pluralité d'ensembles d'information d'ouverture d'étrangleur et de puissances d'entraînement de moteur, et chacune des puissances d'entraînement de moteur correspond à une vitesse régulière stabilisée différente du véhicule électrique ; et
l'entraînement, dans le cas où l'information d'ouverture d'étrangleur obtenue tombe à l'intérieur de la plage d'ouverture d'étrangleur à vitesse régulière stabilisée, d'un moteur du véhicule électrique sur la base de la puissance d'entraînement de moteur cible déterminée, de telle sorte que le véhicule électrique soit entraîné de manière à ce qu'il se déplace à une vitesse régulière stabilisée cible qui correspond à la puissance d'entraînement de moteur cible ;
la détermination, dans le cas où l'information d'ouverture d'étrangleur obtenue n'est pas à l'intérieur de la plage d'ouverture d'étrangleur à vitesse régulière stabilisée, de si l'information d'ouverture d'étrangleur obtenue tombe à l'intérieur de la plage d'ouverture d'étrangleur en survitesse ;
la détermination, conformément à une courbe de caractéristique d'étrangleur électronique, d'une puissance d'entraînement de moteur qui correspond à l'information d'ouverture d'étrangleur, dans le cas où l'information d'ouverture d'étrangleur obtenue tombe à l'intérieur de la plage d'ouverture d'étrangleur en survitesse, dans lequel la courbe de caractéristique d'étrangleur électronique représente une corrélation positive entre l'information d'ouverture d'étrangleur et la puissance d'entraînement de moteur sous des conditions de fonctionnement normal.

2. Procédé de commande d'entraînement pour le véhicule électrique selon la revendication 1, dans lequel le véhicule électrique est configuré de telle sorte qu'il présente une pluralité de modes de fonctionnement, et des modes de fonctionnement différents d'une même information d'ouverture d'étrangleur dans la table de référence de vitesses régulières stabilisées et de puissances d'étrangleur correspondent à des vitesses régulières stabilisées différentes et/ou à des puissances d'entraînement de moteur différentes du véhicule électrique, dans lequel la détermination, sur la base de la table de référence préconfigurée de vitesses régulières stabilisées et de puissances d'étrangleur, d'une puissance d'entraînement de moteur cible qui correspond à l'information d'ouverture d'étrangleur obtenue comprend :
l'obtention d'un mode de fonctionnement courant du véhicule électrique ; et
la détermination d'une puissance d'entraînement de moteur cible correspondante en consultant, sur la base du mode de fonctionnement courant et de l'information d'ouverture d'étrangleur obtenue, la table de référence de vitesses régulières stabilisées et de puissances d'étrangleur.

3. Procédé de commande d'entraînement pour le véhicule électrique selon la revendication 1, dans lequel, avant la détermination, sur la base d'une table de référence préconfigurée de vitesses régulières stabilisées et de puissances d'étrangleur, d'une puissance d'entraînement de moteur cible qui correspond à l'information d'ouverture d'étrangleur obtenue, le procédé comprend en outre :
l'obtention d'une résistance de roue libre de véhicule du véhicule électrique à une vitesse de déplacement étalonnée, dans lequel la vitesse de déplacement étalonnée correspond à une information d'ouverture d'étrangleur étalonnée ;
la détermination d'une puissance de résistance de véhicule qui correspond à la résistance de roue libre de véhicule ;
la détermination, sur la base de la puissance de résistance de véhicule et d'un rendement de conversion d'entraînement de moteur préconfiguré, d'une puissance d'entraînement de moteur étalonnée qui correspond à la vitesse de déplacement ; et
l'établissement, sur la base de la puissance d'entraînement de moteur étalonnée et de la vitesse de déplacement étalonnée, de la table de référence de vitesses régulières stabilisées et de puissances d'étrangleur.

4. Système de commande d'entraînement (40) pour un véhicule électrique, comprenant :
une unité d'obtention d'information d'ouverture d'étrangleur (401) configurée pour obtenir une information d'ouverture d'étrangleur du véhicule électrique, dans lequel l'information d'ouverture d'étrangleur du véhicule électrique comprend une plage d'ouverture d'étrangleur à vitesse régulière stabilisée et une plage d'ouverture d'étrangleur en survitesse plus grande que la plage d'ouverture d'étrangleur à vitesse régulière stabilisée ;
une unité de détermination de puissance d'entraînement de moteur (402) configurée pour déterminer, sur la base de la table de référence préconfigurée de vitesses régulières stabilisées et de puissances d'étrangleur, une puissance d'entraînement de moteur cible qui correspond à l'information d'ouverture d'étrangleur obtenue, dans lequel la table de référence de vitesses régulières stabilisées et de puissances d'étrangleur stocke une relation entre une pluralité d'ensembles d'information d'ouverture d'étrangleur et de puissances d'entraînement de moteur, et chacune des puissances d'entraînement de moteur correspond à une vitesse régulière stabilisée différente du véhicule électrique, dans lequel l'unité de détermination de puissance d'entraînement de moteur (402) comprend un module de détermination de vitesse régulière stabilisée configuré pour déterminer si l'information d'ouverture d'étrangleur obtenue tombe à l'intérieur de la plage d'ouverture d'étrangleur à vitesse régulière stabilisée ; et un module de détermination de puissance de moteur configuré pour déterminer, sur la base de la table de référence préconfigurée de vitesses régulières stabilisées et de puissances d'étrangleur, une puissance d'entraînement de moteur cible qui correspond à l'information d'ouverture d'étrangleur obtenue, dans le cas où l'information d'ouverture d'étrangleur obtenue tombe à l'intérieur de la plage d'ouverture d'étrangleur à vitesse régulière stabilisée ;
une unité d'entraînement de moteur (403) configurée pour entraîner, sur la base de la puissance d'entraînement de moteur cible déterminée, un moteur du véhicule électrique, dans lequel le véhicule électrique se déplace à une vitesse régulière stabilisée cible qui correspond à la puissance d'entraînement de moteur cible ;
un module de détermination de survitesse configuré pour déterminer si l'information d'ouverture d'étrangleur obtenue tombe à l'intérieur de la plage d'ouverture d'étrangleur en survitesse ; et
un module de pilotage d'étrangleur configuré pour déterminer, conformément à une courbe de caractéristique d'étrangleur électronique, une puissance d'entraînement de moteur qui correspond à l'information d'ouverture d'étrangleur, dans le cas où l'information d'ouverture d'étrangleur obtenue tombe à l'intérieur de la plage d'ouverture d'étrangleur en survitesse, dans lequel la courbe de caractéristique d'étrangleur électronique représente une corrélation positive entre l'information d'ouverture d'étrangleur et la puissance d'entraînement de moteur sous des conditions de fonctionnement normal.

5. Système de commande d'entraînement (40) pour le véhicule électrique selon la revendication 4, dans lequel le véhicule électrique est configuré de telle sorte qu'il présente une pluralité de modes de fonctionnement, et des modes de fonctionnement différents d'une même information d'ouverture d'étrangleur dans la table de référence de vitesses régulières stabilisées et de puissances d'étrangleur correspondent à une vitesse régulière stabilisée différente et/ou à une puissance d'entraînement de moteur différente du véhicule électrique, dans lequel l'unité de détermination de puissance d'entraînement de moteur comprend :
un module d'obtention de mode configuré pour obtenir un mode de fonctionnement courant du véhicule électrique ; et
un module de détermination de puissance de mode configuré pour déterminer une puissance d'entraînement de moteur cible correspondante en consultant, sur la base du mode de fonctionnement courant et de l'information d'ouverture d'étrangleur obtenue, la table de référence préconfigurée de vitesses régulières stabilisées et de puissances d'étrangleur.

6. Système de commande d'entraînement (40) pour le véhicule électrique selon la revendication 4, dans lequel le système de commande d'entraînement du véhicule électrique comprend en outre une unité d'étalonnage de table, comprenant :
un module d'obtention de résistance de véhicule configuré pour obtenir une résistance de roue libre de véhicule du véhicule électrique à une vitesse de déplacement étalonnée, avant la détermination, sur la base de la table de référence préconfigurée de vitesses régulières stabilisées et de puissances d'étrangleur, d'une puissance d'entraînement de moteur cible qui correspond à l'information d'ouverture d'étrangleur obtenue ; dans lequel la vitesse de déplacement étalonnée correspond à une information d'ouverture d'étrangleur étalonnée ;
un module de détermination de puissance de résistance de véhicule configuré pour déterminer une puissance de résistance de véhicule qui correspond à la résistance de roue libre de véhicule ;
un module de détermination de puissance étalonnée configuré pour déterminer, sur la base de la puissance de résistance de véhicule et d'un rendement de conversion d'entraînement de moteur préconfiguré, une puissance d'entraînement de moteur étalonnée qui correspond à la vitesse de déplacement ; et
un module d'établissement de table de référence configuré pour établir, sur la base de la puissance d'entraînement de moteur étalonnée et de la vitesse de déplacement étalonnée, la table de référence de vitesses régulières stabilisées et de puissances d'étrangleur.

7. Support de stockage lisible par machine, comprenant une mémoire dans laquelle sont stockées des instructions qui sont utilisées pour permettre à une machine d'exécuter le procédé de commande d'entraînement pour le véhicule électrique selon l'une quelconque des revendications 1 à 3.
